# EUROPÄISCHE PATENTSCHRIFT

(11) **EP 2 023 077 B1**
(45) Veröffentlichungstag und Bekanntmachung des Hinweises auf die Patenterteilung: **10.06.2015**
(21) Anmeldenummer: 07114173.3
(22) Anmeldetag: 10.08.2007
(51) Int. Cl.: G01B 11/00

(54) **Verfahren und Vermessungssystem zur berührungslosen Koordinatenmessung an einer Objektoberfläche**
Method and measuring system for contactless coordinate measurement of the surface of an object
Procédé et système de mesure de coordonnées sans contact sur une surface d'objet

(43) Veröffentlichungstag der Anmeldung: 11.02.2009
(60) Teilanmeldung: 11173817.5
(73) Patentinhaber: Leica Geosystems AG, 9435 Heerbrugg (CH)
(72) Erfinder: Pettersson, Bo, SW7 4UB London (GB); Siercks, Knut, CH-9015, St. Gallen (CH); Zebhauser, Benedikt, CH-9400 Rorschach (CH)
(74) Vertreter: Kaminski Harmann

(56) Entgegenhaltungen:
- EP-A2- 0 754 930
- DE-A1- 4 403 901
- FR-A- 2 846 413
- US-A- 4 969 108
- US-A- 5 805 289
- US-A- 6 073 056
- US-A1- 2003 048 459
- US-A1- 2005 166 413

## Beschreibung

Die Erfindung betrifft ein Verfahren und ein Vermessungssystem zur berührungslosen Koordinatenmessung an der Objektoberfläche eines in einem Objektkoordinatensystem zu vermessenden Objekts.

Zur berührungslosen photogrammetrischen Koordinatenmessung an der Oberfläche eines Objekts im Nahbereich wird aus Bildern, die das Objekt aus verschiedenen Perspektiven wiedergeben, durch Transformierung der Bilddaten in ein Objektkoordinatensystem auf die Abmessungen des Objekts geschlossen. Hierzu werden die Bilddaten in einer Datenverarbeitungseinheit verarbeitet. Die Grundlage der Koordinatenberechnung ist die Bestimmung der Kameraorientierungen der beteiligten Bilder.

Es besteht hierbei, wie aus dem Stand der Technik bekannt, die Möglichkeit, zeitlich versetzt aus verschiedenen Perspektiven den zu vermessenden Flächenabschnitt der Objektoberfläche mittels einer einzigen Kamera aufzunehmen und im Anschluss die jeweils zweidimensionalen Bilddaten mittels eines Bildverarbeitungssystems zu einem sogenannten dreidimensionalen Bild zu verarbeiten. Den Bildpunkten dieses dreidimensionalen Bildes werden hierbei jeweils Tiefeninformationen zugeordnet, so dass jedem zu untersuchenden Bildpunkt, insbesondere allen Bildpunkten, 3D-Bildkoordinaten in einem Bildkoordinatensystem, das sich aus den Kameras und deren Perspektiven bestimmt, zugeordnet sind. Unterschiedliche Bildverarbeitungsverfahren zur Erzeugung eines derartigen dreidimensionalen Bildes aus mehreren, die gleiche Szene aus unterschiedlichen Perspektiven zeigenden zweidimensionalen Bildern sind aus dem Stand der Technik bekannt.

Weiters besteht die Möglichkeit, wie ebenfalls aus dem Stand der Technik bekannt, anstelle der zeitlich versetzten Aufnahme des Flächenabschnitts aus unterschiedlichen Perspektiven mittels einer Kamera eine im Wesentlichen zeitgleiche Aufnahme unter Zuhilfenahme von mehreren Kameras durchzuführen. Dies hat sowohl den Vorteil, dass ohne Kamerabewegung ein dreidimensionales Erfassen des Flächenabschnitts möglich ist, als auch entfällt ein Erfassen der jeweiligen Kameraausrichtungen, da die Kameras zueinander eine feste relative Ausrichtung und Entfernung besitzen können.

Aus dem Stand der Technik sind unterschiedliche 3D-Bildaufnahmeeinrichtungen bekannt, die sich im Wesentlichen aus zwei oder drei Kameras zusammensetzen, die zueinander beabstandet, also eine Stereobasis aufweisend, in einem gemeinsamen Gehäuse zum Aufnehmen einer Szene aus jeweils unterschiedlichen, jedoch fixen relativen Perspektive untergebracht sind. Da der aufgenommene Flächenabschnitt nicht zwangsläufig charakteristische Bildmerkmale aufweist, die ein elektronisches Verarbeiten der Bilder ermöglichen, können Markierungen auf dem Flächenabschnitt aufgebracht werden. Diese Markierungen können mittels eines von der 3D-Bildaufnahmeeinheit auf den Flächenabschnitt projizieren strukturierten Lichtstrahls, insbesondere Laserstrahls, der beispielsweise ein optisches Raster oder ein optisches Markierungskreuz projiziert, erzeugt werden. Regelmässig beinhalten derartige 3D-Bildaufnahmeeinheiten auch eine Bildverarbeitungseinrichtung, die aus den mehreren im Wesentlichen gleichzeitig aufgenommenen Bildern unterschiedlicher Perspektiven ein dreidimensionales Bild ableitet.

Derartige 3D-Bildaufnahmeeinheiten sind beispielsweise die unter dem Markennamen "Optigo" und "OptiCell" bekannten Bildaufnahmesysteme der Firma "CogniTens", die drei in einem gleichschenkligen Dreieck angeordnete Kameras enthalten, sowie das System "Advent" der Firma "ActiCM" mit zwei nebeneinander angeordneten hochauflösenden CCD-Kameras sowie einem Projektor zur Projektion von strukturiertem Licht auf den aufzunehmenden Abschnitt.

Die Bestimmung der Koordinaten von zu vermessenden, aufgenommenen Bildelementen erfolgt in der Regel mittels referenzierter Markierungen innerhalb des Bildes, von welchen Markierungen aus die eigentliche 3D-Koordinatenmessung stattfindet. Hierbei wird das Bildkoordinatensystem, welches sich auf das aufgenommene dreidimensionale Bild bezieht und somit auf die 3D-Bildaufnahmeeinheit bezogen ist, in das Objektkoordinatensystem, innerhalb welchem das Objekt zu vermessen ist und welchem beispielsweise das CAD-Modell des Objekts zugrunde liegt, transformiert. Die Transformation findet auf Basis von aufgenommenen Markierungen statt, deren Positionen im Objektkoordinatensystem bekannt sind. Mit den aus dem Stand der Technik bekannten 3D-Bildaufnahmeeinheiten werden hierbei Genauigkeiten von unter 0,5 Millimeter erreicht.

Weiters sind 3D-Scannsysteme insbesondere in Form von 3D-Laserscanners bekannt, welche innerhalb eines Flächenbereichs eine Tiefenabtastung durchführen und eine Punktwolke erzeugen. Hierbei ist zwischen seriellen Systemen, bei welchen ein Laserstrahl eine Fläche Zeile für Zeile abtastet, parallelen Systeme, bei welchen eine Scannlinie über eine Fläche gefächert wird, und vollparallelen Systemen, sogenannten RIMs oder Range Imaging Systemen, die eine Vielzahl an Punkten innerhalb eines Flächenbereich zeitgleich abtasten und somit ein Tiefenaufnahme des Flächenbereichs durchführen, zu unterscheiden. All diesen Systemen ist in der Regel gemein, dass die Tiefenabtastung mittels mindestens eines insbesondere über die Fläche bewegten Distanzmesslaserstrahls erfolgt. Insbesondere derartige serielle Systeme sind weit verbreitet und beispielsweise unter den Produktbezeichnungen "Leica HDS 6000", "Leica ScanStation 2", "Trimble GX 3D Scanner", "Zoller + Fröhlich IMAGER 5003" und "Zoller + Fröhlich IMAGER 5006" kommerziell verfügbar.

Ein Problem jeder 3D-Bildaufnahmeeinheit bildet der bauartbedingt begrenzte Aufnahmebereich, innerhalb welchen eine Bildaufnahme mit der geforderten Auflösung erfolgen kann. Bei der dreidimensionalen Erfassung grösserer Objekte ist es daher unvermeidbar, mehrere einzelne dreidimensionale Aufnahmen aus unterschiedlichen Positionen und Ausrichtungen der 3D-Bildaufnahmeeinheit zu machen. Diese Vielzahl kleinerer Bildaufnahmen wird im Anschluss mittels Abgleich überlappender Bildbereiche und unter Zuhilfenahme von Markierungen innerhalb des aufgenommenen Flächenabschnitts zu einem grösseren dreidimensionalen Gesamtbild zusammengefügt. Unterschiedliche Verfahren zur Lösung dieser Aufgabe sind aus dem Stand der Technik bekannt. Ein allgemeines Problem bei diesen Verfahren besteht darin, dass die einzelnen dreidimensionalen Bilder, welche zu einem grösseren Bild zusammengefügt werden sollen, einen Überlappungsbereich aufweisen müssen. Das diskrete Verändern der Position der 3D-Bildaufnahmeeinheit von einem mindestens einen Referenzpunkt aufweisenden ersten Flächenabschnitt zu einem zweiten Flächenabschnitt, der vom ersten Flächenabschnitt distanziert ist und keinen Referenzpunkt enthält, ist mittels der bildverarbeitenden Systeme nicht möglich, falls keine weiteren Bilder aufgenommen wurden, welche die beiden Flächenabschnitte verbinden. Es ist daher erforderlich, eine Vielzahl an Zwischenbildaufnahmen durchzuführen, um die beiden zu vermessenden, distanzierten Flächenabschnitte optisch zu verbinden und die zusammenhängende Bildverarbeitung zu ermöglichen. Durch die Aufnahme einer Vielzahl an dreidimensionalen Bildern, die keinen unmittelbaren Messinhalt aufweisen, wird das gesamte Messerverfahren verlangsamt und Speicher- und Rechenressourcen beansprucht. Weiters wirken sich die zwangsläufig mit geringen Messfehlern behafteten Koordinatenmessungen innerhalb der Bildaufnahme beim Zusammensetzen der Vielzahl von Bildern drastisch auf die Messgenauigkeit aus, insbesondere im Falle entfernter Referenzpunkte.

Weiters sind Messsysteme und Verfahren aus dem Stand der Technik bekannt, bei welchen die 3D-Bildaufnahmeeinheit von dem Kopf eines Industrieroboters oder einer Portal-Koordinatenmessmaschine getragen wird und verstellbar ist. Aufgrund des hohen Gewichts einer hochwertigen und hochauflösenden 3D-Bildaufnahmeeinheit, das zum Teil über 10 Kilogramm beträgt, ist eine präzise Erfassung der Position des 3D-Bildaufnahmeeinheit mit der erforderlichen Genauigkeit, die der Bildaufnahmegenauigkeit gleichkommt, nicht möglich, da dies einen derart stabilen Aufbau des Handhabungssystems erfordern würde, dass der Einsatzbereich der 3D-Bildaufnahmeeinheit auf stationäre Systeme begrenzt wäre. Beispielsweise ein Einsatz im Innenraum einer Fahrzeugkarosserie würde hierdurch erschwert oder verunmöglicht werden. Industrieroboter sind aufgrund ihrer geringen Messgenauigkeit, die erheblich geringer ist als die einer präzisen 3D-Bildaufnahmeeinheit, zur externen Referenzierung ungeeignet. Wiederum sind Portal-Koordinatenmessmaschinen nicht zum Tragen schwerer Lasten ausgelegt und liefern bei starker mechanischer Belastung keine zur Referenzierung brauchbaren Messergebnisse. Aus diesem Grunde können die vom Handhabungssystem allfällig gelieferten Positionsmesswerte, welche Aufschluss über die absolute und/oder relative Position der 3D-Bildaufnahmeeinheit geben könnten, zur Referenzierung der Bildaufnahmen, insbesondere mehrere dreidimensionaler Bildaufnahmen unterschiedlicher, nicht zusammenhängender Flächenabschnitt, nicht herangezogen werden.

Die US 4,969,108 A offenbart eine Vorrichtung und ein Verfahren zur optischen Verfolgung einer Naht, beispielsweise einer Schweissnaht. Eine Bildaufnahmeeinheit, beispielsweise in Form einer Laser-Scanner-Kamera, ist an einem Manipulator angeordnet. Der zusätzlich mit einem von der Kamera beobachteten Werkzeug ausgestattete Manipulator ist als ein Handhabungsroboter ausgebildet. In Abhängigkeit von den bestimmten Nahtpunkten wird eine Anpassung der programmierten Manipulator-Bewegung durchgeführt. Punkte entlang der Naht werden einem gewünschten Koordinatensystem zugeordnet. Dazu werden vorgängig bekannte Referenzpunkte bestimmt.

In der US 2003/0048459 A1 wird ein Messsystem zur Verwendung in Computer-unterstützter Produktion oder in Computerunterstützten Inspektionssystemen mit einem Laserscanner als Bildaufnahmeeinheit und zwei Kameras als Teil eines Basismesssystems beschrieben. Mit dem Laserscanner wird ein Abstand zu einer Oberfläche als Tiefeninformation für X,Y-Positionen im Koordinatensystem des Laserscanners bestimmt. Position und Ausrichtung des Laserscanners werden von den zwei Kameras erfasst. Die Position der Kameras wird aus Elementen oder Referenzpunkten der Kameras bestimmt.

Die US 5,805,289 A offenbart eine Messanordnung mit einem Laserscanner, mit dem eine Objektoberfläche abgescannt und dabei Scandaten generiert werden, sowie einer Digitalkamera zur Erzeugung von überlappenden Bildern. Mittels einer entkoppelten, ein absolutes Koordinatensystem vorgebenden, insbesondere optischen Koordinatenmessmaschine werden die Position und die Ausrichtung der Kamera für jedes Bild und des Laserscanners zur Erzeugung absoluter Objektoberflächen-Scankoordinaten erfasst.

In der FR 2 846 413 A wird eine Messanordnung mit einem Laserscanner, mit dem eine Objektoberfläche abgescannt wird, beschrieben. Der Laserscanner wird von einem Gelenkarm gehalten, der über einen Sockel von einem stabilen Träger, vorzugsweise aus Marmor, getragen wird. Damit wird eine totale Fixierung der Messanordnung erreicht. Die Position des Laserscanners wird über Sensoren bzw. Encodern für die Positionen des Gelenkarms bestimmt. Es wird nicht beschrieben, ob und wie die vom Scanner aufgenommenen Bildpunkte bzw. Bildkoordinaten in Objektkoordinaten transformiert werden.

Aus der US 6,073,056 ist ein Interferometer-Messsystem bekannt, mit welchem 3-dimensionale Punktdaten einer Oberfläche in einem ersten Koordinatensystem erstellt werden. Das Interferometer-Messsystem ist auf dem Arm einer Koordinatenmessmaschine angeordnet, die sich in einem globalen Koordinatensystem befindet. Die 3-dimensionalen Punktdaten der Oberfläche werden aus der Kenntnis der mittels der Koordinatenmessmaschine erfassten Lage des Interferometer-Messsystems in globale Koordinaten transformiert.

Die DE 44 03 901 A1 zeigt einen Koordinaten-Messarm ohne 3D-Bildaufnahmeeinheit.

Die US 2005/166413 A1 beschreibt allgemein einen Messarm mit einer optischen Sonde.

In der EP 0 754 930 A2 wird ein 3D-Objekterfassung ohne Gelenkarm beschrieben.

Aufgabe der Erfindung ist es daher, ein Verfahren und eine Vorrichtung zur Verfügung zu stellen, welche eine berührungslose, präzise und schnelle Koordinatenmessung an der Objektoberfläche eines in einem Objektkoordinatensystem zu vermessenden Objekts ohne zwangsläufige Verwendung einer Vielzahl an zu erfassenden Referenzmarkierungen ermöglicht.

Diese Aufgabe wird durch die Verwirklichung der Merkmale der unabhängigen Ansprüche 1 und 10 gelöst. Merkmale, die die Erfindung in vorteilhafter Weise weiterbilden, sind den abhängigen Patentansprüchen zu entnehmen.

Das Verfahren gemäss der Erfindung wird unter Verwendung einer an sich bekannten 3D-Bildaufnahmeeinheit zur elektronischen Aufnahme eines dreidimensionalen Bildes eines Flächenabschnitts einer Objektoberfläche durchgeführt. Das dreidimensionale Bild setzt sich aus einer Vielzahl an Bildpunkten, denen jeweils eine Tiefeninformation zugeordnet ist, zusammen. Die Bildpunkte ergeben sich insbesondere aus der vertikalen und horizontalen Auflösung der verwendeten optischen Aufnahmeelemente, beispielsweise der CCD-Bildsensoren. Derartige 3D-Bildaufnahmeeinheiten sind aus dem Stand der Technik bekannt, beispielsweise in Form der unter dem Markennamen "Optigo" und "OptiCell" vertriebenen Bildaufnahmesysteme der Firma "CogniTens", die drei in einem gleichschenkligen Dreieck angeordnete Kameras enthalten, wie auch in Form des Systems "Advent" der Firma "ActiCM" mit zwei nebeneinander angeordneten hochauflösenden CCD-Kameras sowie einem Projektor zur Projektion strukturierten Lichts auf den aufzunehmenden Abschnitt. Aus diesem Grunde wird auf eine genauere Darstellung hier verzichtet.

Die 3D-Bildaufnahmeeinheit befindet sich in einer ersten Position und ersten Ausrichtung, von welcher aus ein erstes dreidimensionales Bild eines zu vermessenden ersten Flächenabschnitts der Objektoberfläche elektronisch aufgenommen wird. Dieses dreidimensionale Bild wird insbesondere aus mehreren mittels mehrerer Kameras aufgenommener Einzelbilder, welche den ersten Flächenabschnitt von unterschiedlichen Perspektiven abbilden, elektronisch insbesondere von der 3D-Bildaufnahmeeinheit erzeugt. Das erste dreidimensionale Bild setzt sich aus einer Vielzahl an Bildpunkten, denen jeweils eine Tiefeninformation zugeordnet ist, zusammen.

Anstelle der Verwendung mehrerer Kameras, die eine Stereobasis aufweisen, ist es auch möglich, als 3D-Bildaufnahmeeinheit ein 3D-Abtastsystem, beispielsweise einen geeigneten 3D-Laserscanner, zur Aufnahme des ersten dreidimensionalen Bildes zu verwenden. Der 3D-Laserscanner tastet den Flächenabschnitt von der ersten Position und ersten Ausrichtung aus mittels eines bewegten Laserstrahls seriell oder parallel, oder vollparallel, wie oben beschrieben mit entsprechenden Systemen ab. Der 3D-Laserscanner kann neben der Laserscanneinheit zusätzlich auch eine Bildkamera, beispielsweise eine CCD-Kamera, zur zweidimensionalen Bildaufnahme aufweisen. Die Tiefeninformation der mittels der Kamera aufgenommenen Bildpunkte wird dabei durch die Laserdistanzmessung gewonnen.

Das erste dreidimensionale Bild wird von einer einzigen ersten Position und ersten Ausrichtung, ohne zwangsläufige Positions- oder Ausrichtungsänderung aufgenommen und erzeugt. Den im dreidimensionalen Bild enthaltenen und hinsichtlich der Vermessung des ersten Flächenabschnitts zu untersuchenden Bildpunkten werden 3D-Bildkoordinaten in einem Bildkoordinatensystem zugeordnet, das sich auf die 3D-Bildaufnahmeeinheit und den relativ zu ihr aufgenommenen Flächenabschnitt bezieht. Beispielsweise setzen sich die Koordinaten aus der horizontalen und vertikalen Position des Bildpunkts innerhalb des dreidimensionalen Bildes sowie der Entfernung des aufgenommenen Bildpunkts von einer Aufnahmeebene der 3D-Bildaufnahmeeinheit zusammen. Das Zuordnen erfolgt beispielsweise durch die 3D-Bildaufnahmeeinheit oder eine externe Datenverarbeitungseinheit, welcher die Daten zugeführt sind.

Die erste Position und erste Ausrichtung der 3D-Bildaufnahmeeinheit in dem Objektkoordinatensystem, innerhalb welchem der Flächenabschnitt zu vermessen ist und innerhalb welchem das zu vermessende Objekt fixiert ist, wird zum Zeitpunkt der Aufnahme des ersten dreidimensionalen Bildes durch eine Messvorrichtung erfasst. Diese Messvorrichtung ist mit dem Objektkoordinatensystem gekoppelt. Dies bedeutet, dass das zu vermessende Objekt und die Basis der Messvorrichtung, in Bezug zu welcher die Positions- und Ausrichtungsmessung erfolgt, im Laufe des Messvorgangs miteinander gekoppelt sind, während die 3D-Bildaufnahmeeinheit gegenüber der Basis und dem zu vermessenden Objekt aufgrund ihrer Beweglichkeit nicht gekoppelt ist. Zur vereinfachten Darstellung wird daher das gemeinsame Koordinatensystem, auf welche sich die Basis der Messvorrichtung und das Objekt beziehen, als Objektkoordinatensystem bezeichnet, auch wenn das Objekt in einem anderen, beispielsweise durch ein CAD-Modell definiertes Koordinatensystem vermessen werden soll. Die allfällig unterschiedlichen Koordinatensysteme der Messvorrichtung und des Objekts weisen jedoch einen festen gemeinsamen Bezug auf und sind somit miteinander gekoppelt oder koppelbar.

In einem nächsten Schritt werden den Bildpunkten erste 3D-Objektkoordinaten in dem Objektkoordinatensystem aus der Kenntnis der ersten 3D-Bildkoordinaten sowie der ersten Position und ersten Ausrichtung der 3D-Bildaufnahmeeinheit zugeordnet. Das Zuordnen erfolgt mittels einer aus dem Stand der Technik bekannten Koordinatentransformation. Somit werden die 3D-Bildkoordinaten an einem externen Koordinatensystem, dem Objektkoordinatensystem referenziert.

Ein Vorteil der Erfindung besteht insbesondere darin, dass aufgrund des Bezugs der 3D-Bildkoordinaten zu den Objektkoordinaten in Form eines externen Messsystems, das die Position und Ausrichtung der 3D-Bildaufnahmeeinheit misst, auf die Verwendung einer Vielzahl an Referenzpunkten innerhalb der Bildaufnahme verzichtet werden kann. Wird die 3D-Bildaufnahmeeinheit in eine zweite Position und zweite Ausrichtung zur Aufnahme und Vermessung eines zweiten Flächenabschnitts gebracht, erfolgt das Referenzieren des zweiten dreidimensionalen Bildes an der durch das Messsystem gemessenen zweiten Position und Ausrichtung. Ein Referenzieren an zuvor aufgenommenen Bildern und darin enthaltenen Markierungen mittels Bildverarbeitung kann entfallen.

Es ist möglich, sequentiell zwei oder mehrere nicht zusammenhängende Flächenabschnitte auf der Objektoberfläche des Objekts aufzunehmen, ohne Zwischenaufnahmen zu machen, welche den zweiten Flächenabschnitt mit dem ersten verbinden. Hierdurch wird das Messverfahren schneller durchführbar und präziser. Mittels einer Datenverarbeitungseinheit ist es möglich, mehrere sich überlappende 3D-Bildaufnahmen miteinander zu verbinden und zu einem gemeinsamen Bild zusammenzufügen. Dies kann aufgrund der externen Referenzierung jeder dreidimensionalen Bildaufnahme hochpräzise ohne Kopplungsfehler erfolgen.

In einer Weiterbildung der Erfindung ist die Messvorrichtung von Haltekräften, welche beim Halten der 3D-Bildaufnahmeeinheit wirken, im Wesentlichen entkoppelt. Dies bedeutet, dass die Messvorrichtung keinen wesentlichen Haltekräften zum Halten der 3D-Bildaufnahmeeinheit ausgesetzt ist und somit keine Torsions- und Biegekräfte, welche durch das Gewicht der 3D-Bildaufnahmeeinheit entstehen, auf die Messvorrichtung wirken. Hierdurch wird die Messgenauigkeit beim Erfassen der Position und Ausrichtung der 3D-Bildaufnahmeeinheit drastisch erhöht und kann der hohen optischen Messgenauigkeit der 3D-Bildaufnahmeeinheit entsprechen. Weiters ist es möglich, die Messvorrichtung kompakt und mobil auszugestalten. Dies hat vor allem Vorteile bei Verwendung der 3D-Bildaufnahmeeinheit innerhalb eines schlecht zugänglichen Raumes, beispielsweise innerhalb der Karosserie eines zu vermessenden Fahrzeugs.

Die 3D-Bildaufnahmeeinheit wird beispielsweise von einer Haltevorrichtung, welche die Haltekräfte im Wesentlichen aufnimmt, bei der Bildaufnahme gehalten. Diese Haltevorrichtung kann z.B. durch einen Gelenkhaltearm, der von der Messvorrichtung entkoppelt ist, gebildet werden. Alternativ erfolgt das Halten der 3D-Bildaufnahmeeinheit mittels eines Handgriffs von Hand.

Erfindungsgemäss ist es vorgesehen, dass die Messvorrichtung als ein verstellbarer mechanischer 3D-Koordinatenmess-Gelenkarm ausgebildet ist. Derartige 3D-Koordinatenmess-Gelenkarme sind aus dem Stand der Technik bekannt. Vergleichbare Systeme, "Articulated Arm" oder "Portable CMM" genannt, werden von der Firma "Romer" als "Sigma", "Flex" oder "Omega" und der Firma "CimCore" als "Infinite" oder "Stinger" angeboten.

Ein 3D-Koordinatenmess-Gelenkarm zeichnet sich durch seine grosse Flexibilität, einfache Handhabbarkeit, seinen kompakten Aufbau, sein geringes Gewicht und die Möglichkeit eines mobilen Einsatzes aus. Mittels einer an einem 3D-Koordinatenmess-Gelenkarm montierten 3D-Bildaufnahmeeinheit ist es möglich, dreidimensionale Bildaufnahmen auch in nur schwer zugänglichen Bereichen durchzuführen, selbst ohne Bestehen einer direkten Sichtverbindung zur Basis des 3D-Koordinatenmess-Gelenkarms, da dieser abwinkelbar ist. Somit ist selbst im Innerraum eines Fahrzeugs ein hochgenaues Referenzieren an einem externen Koordinatensystem möglich.

Das Vermessungssystem umfaßt ein im Objektkoordinatensystem referenziertes optisches Referenzlasermesssystem, das mit dem Objektkoordinatensystem gekoppelt ist, insbesondere ein Lasertracking-System. Die Position und Ausrichtung der 3D-Bildaufnahmeeinheit im Objektkoordinatensystem wird mittels des Lasermesssystems durch mittelbares oder unmittelbares Anzielen der 3D-Bildaufnahmeeinheit berührungslos erfasst. Ein hierzu geeignetes Lasermesssystem ist beispielsweise das Laser Tracker System "T-Cam" der Firma "Leica Geosystems", das die Position und Ausrichtung eines Probenhalters "T-Probe", an welchem die 3D-Bildaufnahmeeinheit anordenbar ist, in allen sechs Freiheitsgraden hochpräzise optisch bestimmt. Das Laser Tracker System "T-Cam" wird im Objektkoordinatensystem referenziert und kann somit die Position und Ausrichtung der 3D-Bildaufnahmeeinheit präzise bestimmen. Auch bei Einsatz dieses Systems ist das Messsystem von Haltekräften der 3D-Bildaufnahmeeinheit entkoppelt. Das Halten der 3D-Bildaufnahmeeinheit kann beispielsweise mittels eines Gelenkhaltearms oder von Hand erfolgen.

Das erfindungsgemässe Verfahren und die erfindungsgemässe Vorrichtung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1: ein erfindungsgemässes Vermessungssystem und -verfahren mit einem 3D-Koordinatenmess-Gelenkarm als Messvorrichtung sowie einer ersten und einer weiteren Position und Ausrichtung der 3D-Bildaufnahmeeinheit;
- Fig. 2: ein erfindungsgemässes Vermessungssystem und -verfahren mit einem 3D-Koordinatenmess-Gelenkarm, der in einer ersten und einer zweiten Stellung positioniert ist; und
- Fig. 3: ein Beispiel für ein nicht unter die Ansprüche fallendes Vermessungssystem und -verfahren mit einem optischen Lasermesssystem als Messvorrichtung sowie einer ersten und einer weiteren Position und Ausrichtung der 3D-Bildaufnahmeeinheit.

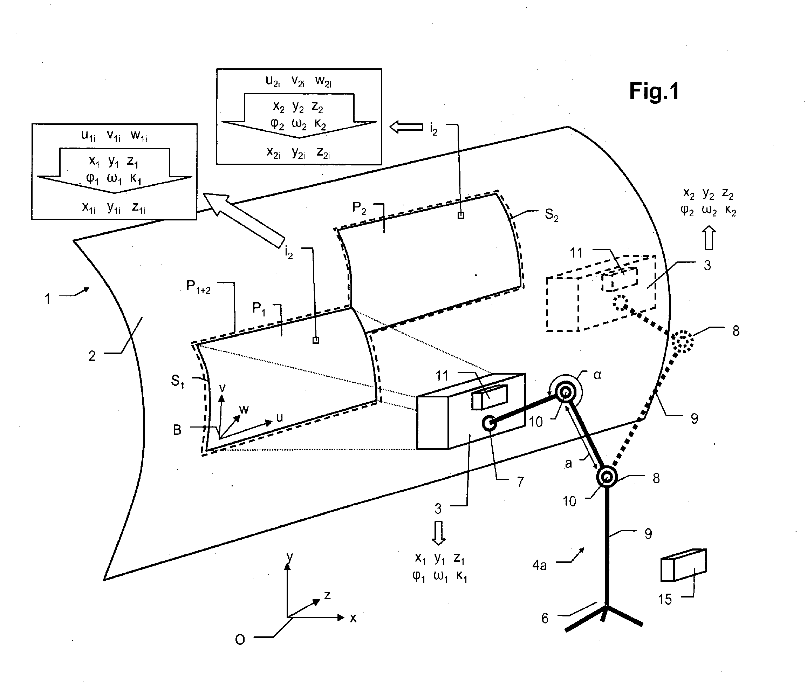

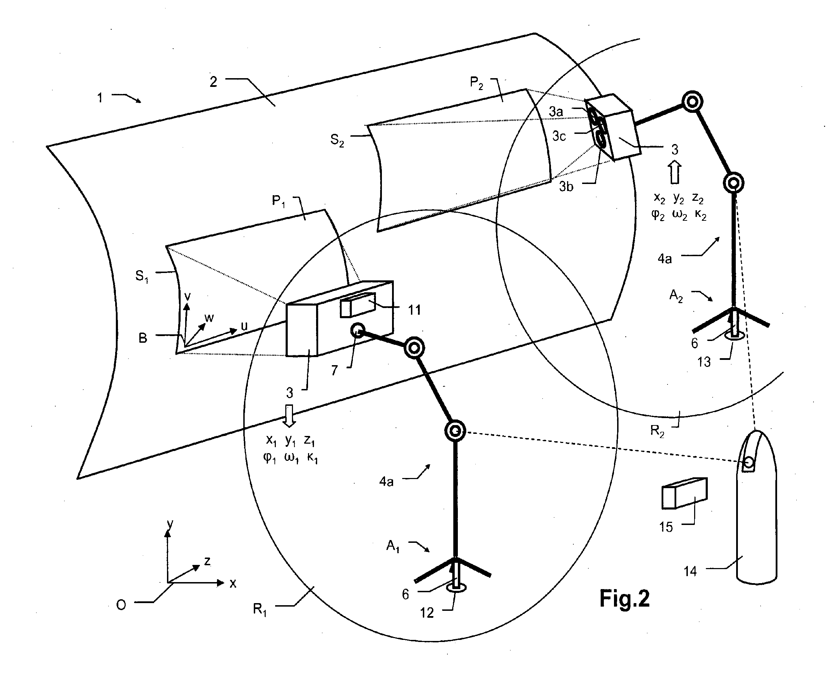

Das in Figur 1 veranschaulichte Vermessungssystem und Vermessungsverfahren zur berührungslosen Koordinatenmessung an der Objektoberfläche 2 eines in einem Objektkoordinatensystem O zu vermessenden Objekts 1 weist eine 3D-Bildaufnahmeeinheit 3 auf, die zum elektronischen Aufnehmen eines ersten dreidimensionalen Bildes P₁ eines ersten Flächenabschnitts S₁ der Objektoberfläche 2 ausgebildet ist. Die 3D-Bildaufnahmeeinheit 3 beinhaltet drei elektronische Kameras 3a, 3b, 3c (siehe Figur 2), die aus drei unterschiedlichen Erfassungswinkeln den ersten Flächenabschnitt S₁ zum Erstellen des dreidimensionalen Bildes P₁ aufnehmen. Ein derartiges System ist beispielsweise das System "Optigo" von "CogniTens". Mit der 3D-Bildaufnahmeeinheit 3 wird in einer ersten Position x₁, y₁, z₁ und ersten Ausrichtung ϕ₁, ω₁, κ₁ das erste dreidimensionale Bild P₁ des ersten Flächenabschnitts S₁ der Objektoberfläche 2 elektronisch aufgenommen, wobei sich das erste dreidimensionale Bild P₁ aus einer Vielzahl an ersten Bildpunkten i₁, denen jeweils eine Tiefeninformation zugeordnet ist, zusammensetzt. Den ersten Bildpunkten i₁ werden erste 3D-Bildkoordinaten u₁ᵢ, v₁ᵢ, w₁ᵢ in einem Bildkoordinatensystem B der 3D-Bildaufnahmeeinheit 3 zugeordnet. Die 3D-Bildaufnahmeeinheit 3 gibt diese ersten 3D-Bildkoordinaten u₁ᵢ, v₁ᵢ, w₁ᵢ, elektronisch aus.

Die erste Position x₁, y₁, z₁ und erste Ausrichtung ϕ₁, ω₁, κ₁ der 3D-Bildaufnahmeeinheit 3 in dem Objektkoordinatensystem O wird durch eine mit dem Objektkoordinatensystem O gekoppelte Messvorrichtung 4a erfasst. Die Messvorrichtung ist als ein verstellbarer mechanischer 3D-Koordinatenmess-Gelenkarm 4a ausgebildet und entspricht beispielsweise dem Produkt "Sigma", "Flex" oder "Omega" der Firma "Romer". Der 3D-Koordinatenmess-Gelenkarm 4a besitzt ein im Objektkoordinatensystem O gekoppeltes Ende 6 und ein gegenüberliegendes bewegliches Messende 7. Zwischen den Enden 6, 7 sind mehrere mittels Drehgelenken 8 derart zueinander schwenkbar und/oder verdrehbar verbundene Armabschnitte 9 angeordnet, dass das bewegliche Messende 7 innerhalb eines ersten Raumabschnitts R₁ (siehe Figur 2) frei bewegbar ist. Weiters sind Winkelsensoren 10 vorgesehen, die den Drehgelenken 8 zugeordnete sind, zum Erfassen der Winkelstellung α des jeweiligen Drehgelenks 8. Das bewegliche Messende 7 ist mit der 3D-Bildaufnahmeeinheit 3 definiert gekoppelt, indem die 3D-Bildaufnahmeeinheit 3 auf dem Messende 7 montiert ist. Die erste Position x₁, y₁, z₁ und erste Ausrichtung ϕ₁, ω₁, κ₁ der 3D-Bildaufnahmeeinheit 3 im Objektkoordinatensystem O wird aus der Kenntnis der Winkelstellungen α der Drehgelenke 8 und der fixen oder flexiblen Längen a der Armabschnitte 9 erfasst. Das bewegliche Messende 7, das mit der 3D-Bildaufnahmeeinheit 3 gekoppelt ist, ist in sechs Freiheitsgraden beweglich. Der 3D-Koordinatenmess-Gelenkarm 4a gibt die erfasste erste Position x₁, y₁, z₁ und erste Ausrichtung ϕ₁, ω₁, κ₁ der 3D-Bildaufnahmeeinheit 3 elektronisch aus.

Einer Datenverarbeitungseinheit 15 sind die ersten 3D-Bildkoordinaten u₁ᵢ, v₁ᵢ, w₁ᵢ von der 3D-Bildaufnahmeeinheit 3 sowie die erste Position x₁, y₁, z₁ und erste Ausrichtung ϕ₁, ω ₁, κ₁ der 3D-Bildaufnahmeeinheit 3 von dem 3D-Koordinatenmess-Gelenkarm 4a zugeführt.

Die Datenverarbeitungseinheit 15 ist derart ausgebildet, dass den ersten Bildpunkten i₁ erste 3D-Objektkoordinaten x₁ᵢ, y₁ᵢ, z₁ᵢ in dem Objektkoordinatensystem O aus der Kenntnis der ersten 3D-Bildkoordinaten u₁ᵢ, v₁ᵢ, w₁ᵢ sowie der ersten Position x₁, y₁, z₁ und ersten Ausrichtung ϕ₁, ω₁, κ₁ der 3D-Bildaufnahmeeinheit 3 elektronisch zugeordnet werden. Die Datenverarbeitungseinheit 15 gibt ein Signal, das die den ersten Bildpunkten i₁ zugeordneten erste 3D-Objektkoordinaten x₁ᵢ, y₁ᵢ, z₁ᵢ enthält, aus. Dieses Signal kann von einem Rechner weiterverarbeitet, optisch in Form eines Bildes auf einem Monitor dargestellt oder zur späteren Weiterverarbeitung aufgezeichnet werden.

Die 3D-Bildaufnahmeeinheit 3 wird von der ersten Position x₁, y₁, z₁ und ersten Ausrichtung ϕ₁, ω₁, κ₁ in eine weitere Position x₂, y₂, z₂ und weitere Ausrichtung ϕ₂, ω₂, κ₂ innerhalb des ersten Raumes R₁ (siehe Figur 2) gebracht, wie gestrichelt in Figur 1 dargestellt. Mit der 3D-Bildaufnahmeeinheit 3 in der weiteren Position x₂, y₂, z₂ und weiteren Ausrichtung ϕ₂, ω ₂, κ₂ wird ein weiteres dreidimensionales Bild P₂ eines weiteren Flächenabschnitts S₂ der Objektoberfläche 2, wie bereits in der ersten Position und Ausrichtung, elektronisch aufgenommen. Auch die weitere Position x₂, y₂, z₂ und weitere Ausrichtung ϕ₂, ω₂, κ₂ der 3D-Bildaufnahmeeinheit 3 in dem Objektkoordinatensystem O wird mit der Messvorrichtung 4a, nämlich dem 3D-Koordinatenmess-Gelenkarm 4a, wie beschrieben erfasst. Den weiteren Bildpunkten i₂ des weiteren dreidimensionalen Bildes P₂ werden, wie auch im Falle der ersten Bildaufnahme, weitere 3D-Objektkoordinaten x₂ᵢ, y₂ᵢ, z₂ᵢ in dem Objektkoordinatensystem O aus der Kenntnis der weiteren 3D-Bildkoordinaten u₂ᵢ, v₂ᵢ, w₂ᵢ des weiteren dreidimensionalen Bildes P₂ sowie der weiteren Position x₂, y₂, z₂ und weiteren Ausrichtung ϕ₂, ω₂, κ₂ der 3D-Bildaufnahmeeinheit 3 zugeordnet. Somit erfolgt ein unabhängiges und hoch präzises externes Referenzieren beider dreidimensionaler Bilder P₁ und P₂.

Die entsprechenden Signale werden, wie auch bei der ersten Bildaufnahme, der Datenverarbeitungseinheit 15 zugeführt, die nach Verarbeitung der Daten wieder ein Signal ausgibt, das die den zweiten Bildpunkten i₂ zugeordneten zweiten 3D-Objektkoordinaten x₂ᵢ, y₂ᵢ, z₂ᵢ enthält.

Wie in Figur 1 gezeigt, überlappen sich der erste Flächenabschnitt S₁ und der weitere Flächenabschnitt S₂ der Objektoberfläche 2 teilweise. Das erste dreidimensionale Bild P₁ mit den ersten 3D-Objektkoordinaten x₁ᵢ, y₁ᵢ, z₁ᵢ und das weitere dreidimensionale Bild P₂ mit den weiteren 3D-Objektkoordinaten x₂ᵢ, y₂ᵢ, z₂ᵢ wird von der Datenverarbeitungseinheit 15 zu einem zusammenhängenden dreidimensionalen Bild P₁₊₂ elektronisch zusammengefügt und in Form eines weiteren Signals ausgegeben.

Die 3D-Bildaufnahmeeinheit 3 wird von einer Haltevorrichtung 11, welche die Haltekräfte im Wesentlichen aufnimmt, bei den Bildaufnahmen in den jeweiligen Positionen und Ausrichtungen gehalten. Die Haltevorrichtung 11 ist in Figur 1 lediglich schematisch in Form eines Aufnahmepunkts auf der 3D-Bildaufnahmeeinheit 3 dargestellt. Die Haltevorrichtung 11 ist beispielsweise als ein nicht dargestellter Gelenkhaltearm, welcher die 3D-Bildaufnahmeeinheit 3 in Position hält, ausgebildet. Alternativ ist die Haltevorrichtung 11 ein Handgriff, mittels welchem die 3D-Bildaufnahmeeinheit 3 in Position und Ausrichtung gehalten wird. Wesentlich hierbei ist weniger von Bedeutung, dass Position und Ausrichtung über einen längeren Zeitraum konstant bleiben, sondern vielmehr, dass zum Zeitpunkt der Bildaufnahme Position und Ausrichtung hochpräzise von der Messvorrichtung erfasst werden.

Durch die Haltevorrichtung 11 wird die Messvorrichtung 4a, also der 3D-Koordinatenmess-Gelenkarm 4a, von Haltekräften, welche beim Halten der 3D-Bildaufnahmeeinheit 3 wirken, im Wesentlichen entkoppelt. Somit wirken seitens der 3D-Bildaufnahmeeinheit 3 keine Biege- oder Torsionskräfte auf den 3D-Koordinatenmess-Gelenkarm 4a, so dass dieser hochpräzise messen kann.

In der Figur 2 ist das Vermessungsverfahren und das Vermessungssystem zur Aufnahme eines weiteren Flächenabschnitts S₂ veranschaulicht, der nicht mehr von dem Raumabschnitt R₁, innerhalb welchem der Bewegungsspielraum des 3D-Koordinatenmess-Gelenkarms 4a ein Bewegen der 3D-Bildaufnahmeeinheit 3 zulässt, aufgenommen werden kann. Somit ist ein Stellungswechsel des 3D-Koordinatenmess-Gelenkarms 4a erforderlich. Das im Objektkoordinatensystem O gekoppelte Ende 6 ist zur Aufnahme des ersten dreidimensionalen Bildes P₁ des ersten Flächenabschnitts S₁ durch die 3D-Bildaufnahmeeinheit 3, deren erste Position x₁, y₁, z₁ und erste Ausrichtung ϕ ₁, ω₁, κ₁ innerhalb des ersten Raumabschnitts R₁ erfasst wird, in einer ersten Stellung A₁ positioniert. Die Bildaufnahme erfolgt wie in Figur 1 beschrieben. Zur Aufnahme eines weiteren dreidimensionalen Bildes P₂ eines weiteren Flächenabschnitts S₂ durch die 3D-Bildaufnahmeeinheit 3 wird der 3D-Koordinatenmess-Gelenkarms 4a mit dessen gekoppelten Ende 6 ist einer zweiten Stellung A₂ positioniert, so dass die 3D-Bildaufnahmeeinheit 3 in eine weitere Position x₂, y₂, z₂ und weitere Ausrichtung ϕ₂, ω₂, κ₂ innerhalb eines zweiten Raumabschnitts R₂ gebracht werden kann. Die weitere Position x₂, y₂, z₂ und weitere Ausrichtung ϕ₂, ω₂, κ₂ ermöglicht nun eine Aufnahme des weiteren Flächenabschnitts S₂. Auch die zweite Bildaufnahme erfolgt wie in Figur 1 beschrieben. Aufgrund der kompakten und mobilen Ausführbarkeit eines 3D-Koordinatenmess-Gelenkarms 4a ist der Stellungswechsel von der ersten Stellung A₁ in die zweite Stellung A₂ einfach möglich.

Die erste Stellung A₁ wird durch eine erste Bodenverankerung 12, die im Objektkoordinatensystem O referenziert und in welcher das gekoppelte Ende 6 lösbar fixiert ist, bestimmt. Auch die zweite Stellung A₂ ist durch eine zweite Bodenverankerung 13, die im Objektkoordinatensystem O referenziert und in welcher das gekoppelte Ende 6 lösbar fixiert wird, vorgegeben. Somit ist es möglich, den 3D-Koordinatenmess-Gelenkarm 4a mit dem Objektkoordinatensystem O durch die erste Bodenverankerung 12 zum Erfassen der ersten Position x₁, y₁, z₁ und ersten Ausrichtung ϕ₁, ω₁, κ₁ und durch die zweite Bodenverankerung 13 zum Erfassen der mindestens einen weiteren Position x₂, y₂, z₂ und weiteren Ausrichtung ϕ ₂, ω₂, κ₂ zu koppeln. Unter einer Bodenverankerung 12 und 13 ist allgemein ein definierter mechanischer Referenzpunkt beispielsweise in Form einer mechanischen Aufnahme und/oder ein optischer oder sonstiger Referenzpunkt beispielsweise in Form einer Markierung oder eines bestimmten Magnetfelds zu verstehen.

Alternativ oder additiv zur Verwendung der Bodenverankerungen 12 und 13 ist ein optisches Referenzlasermesssystem 14 vorgesehen. Die erste Stellung A₁ und die zweite Stellung A₂ werden durch das optische Referenzlasermesssystem 14, das im Objektkoordinatensystem O referenziert ist, optisch bestimmt. Der 3D-Koordinatenmess-Gelenkarm 4a ist mit dem Objektkoordinatensystem O durch das optische Referenzlasermesssystem 14 zum Erfassen der ersten Position x₁, y₁, z₁ und ersten Ausrichtung ϕ₁, ω₁, κ₁ und zum Erfassen der weiteren Position x₂, y₂, z₂ und weiteren Ausrichtung ϕ ₂, ω₂, κ₂ gekoppelt. Als Referenzlasermesssystem 14 kann ein Lasertracker zum Einsatz kommen, der einen definierten Punkt auf dem 3D-Koordinatenmess-Gelenkarm 4a anmisst und somit die aktuelle Position des gekoppelten Endes 6 bestimmt und referenziert. Derartige geeignete Lasertracker sind aus dem Stand der Technik bekannt.

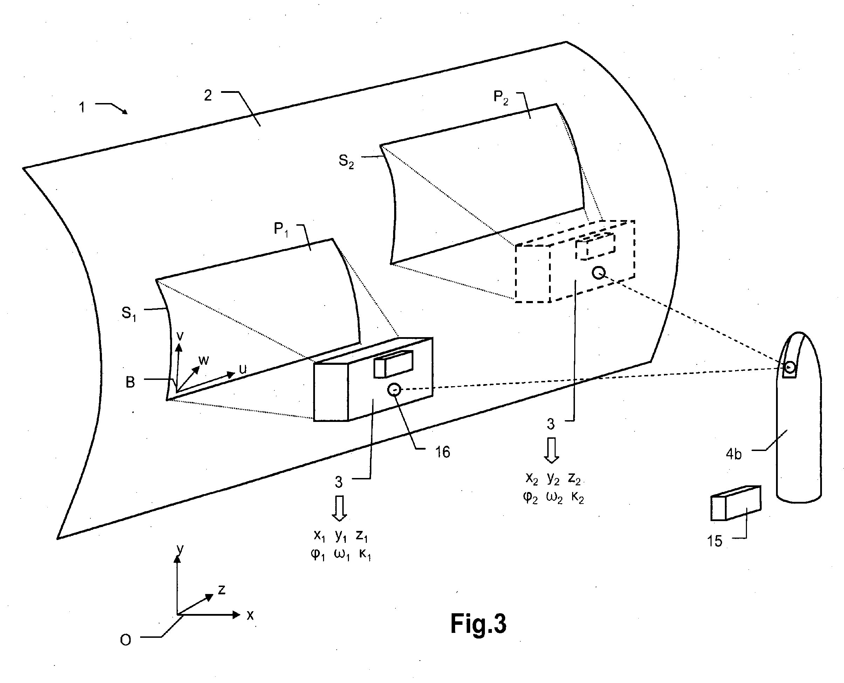

In Figur 3 ist ein nicht unter die Ansprüche fallendes Beispiel eines Vermessungsverfahrens und Vermessungssystems dargestellt. Als Messvorrichtung kommt hier anstelle des 3D-Koordinatenmess-Gelenkarms 4a aus Figur 1 ein optisches Lasermesssystem 4b, das mit dem Objektkoordinatensystem O gekoppelt ist, insbesondere ein Lasertracking-System, zum Einsatz. Die erste Position x₁, y₁, z₁ und erste Ausrichtung ϕ ₁, ω₁, κ₁ sowie die Position x₂, y₂, z₂ und weitere Ausrichtung ϕ ₂, ω₂, κ₂ der 3D-Bildaufnahmeeinheit 3 im Objektkoordinatensystem O wird mittels des Lasermesssystems 4b durch Anzielen der 3D-Bildaufnahmeeinheit 3 berührungslos erfasst. Ein zur Erfassung aller 6 Freiheitsgrade geeignetes Lasermesssystem ist beispielsweise das Laser Tracker System "T-Cam" der Firma "Leica Geosystems", das die Position und Ausrichtung eines Empfängers 16 "T-Probe", der mit 3D-Bildaufnahmeeinheit 3 gekoppelt ist, in allen sechs Freiheitsgraden hochpräzise optisch bestimmt. Das Laser Tracker System "T-Cam", welches das Lasermesssystem 4b bildet, wird im Objektkoordinatensystem O referenziert und kann somit die Position und Ausrichtung der 3D-Bildaufnahmeeinheit 3 präzise bestimmen. Auch bei Einsatz dieses Systems ist das Messsystem 4b von Haltekräften der 3D-Bildaufnahmeeinheit 3 entkoppelt. Das Halten der 3D-Bildaufnahmeeinheit 3 erfolgt über die Haltevorrichtung 11, beispielsweise mittels eines Gelenkhaltearms oder von Hand.

## Patentansprüche

1. Verfahren zur berührungslosen Koordinatenmessung an der Objektoberfläche (2) eines in einem Objektkoordinatensystem (O) zu vermessenden Objekts (1), wobei
• mit einer 3D-Bildaufnahmeeinheit (3) in einer ersten Position (x₁, y₁, z₁) und ersten Ausrichtung (ϕ₁, ω₁, κ₁) ein erstes dreidimensionales Bild (P₁) eines ersten Flächenabschnitts (S₁) der Objektoberfläche (2) elektronisch aufgenommen wird, wobei sich das erste dreidimensionale Bild (P₁) aus einer Vielzahl an ersten Bildpunkten (i₁), denen jeweils eine Tiefeninformation zugeordnet ist, zusammensetzt,
• den ersten Bildpunkten (i₁) erste 3D-Bildkoordinaten (u₁ᵢ, v₁ᵢ, w₁ᵢ) in einem Bildkoordinatensystem (B) der 3D-Bildaufnahmeeinheit (3) zugeordnet werden,
• die erste Position (x₁, y₁, z₁) und erste Ausrichtung (ϕ₁, ω₁, κ₁) der 3D-Bildaufnahmeeinheit (3) in dem Objektkoordinatensystem (O) durch eine mit dem Objektkoordinatensystem (O) gekoppelte Messvorrichtung (4a) erfasst werden und
• den ersten Bildpunkten (i₁) erste 3D-Objektkoordinaten (x₁ᵢ, y₁ᵢ, z₁ᵢ) in dem Objektkoordinatensystem (O) aus der Kenntnis der ersten 3D-Bildkoordinaten (u₁ᵢ, v₁ᵢ, w₁ᵢ) sowie der ersten Position (x₁, y₁, z₁) und ersten Ausrichtung (ϕ₁, ω₁, κ₁) der 3D-Bildaufnahmeeinheit (3) zugeordnet werden,
wobei weiterhin
• die Messvorrichtung als ein verstellbarer mechanischer 3D-Koordinatenmess-Gelenkarm (4a) ausgebildet ist, mit
□ einem im Objektkoordinatensystem (O) gekoppelten Ende (6) und einem gegenüberliegenden beweglichen Messende (7),
□ mehreren zwischen den Enden (6, 7) angeordneten und mittels Drehgelenken (8) derart zueinander schwenkbar und/oder verdrehbar verbundenen Armabschnitten (9), dass das bewegliche Messende (7) innerhalb eines ersten Raumabschnitts (R₁) frei bewegbar ist, und
□ Winkelsensoren (10), die den Drehgelenken (8) zugeordnet sind, zum Erfassen der Winkelstellung (α) des jeweiligen Drehgelenks (8),
• das bewegliche Messende (7) mit der 3D-Bildaufnahmeeinheit (3) definiert gekoppelt ist,
• die erste Position (x₁, y₁, z₁) und erste Ausrichtung (ϕ₁, ω₁, κ₁) der 3D-Bildaufnahmeeinheit (3) im Objektkoordinatensystem (O) aus der Kenntnis der Winkelstellungen (α) der Drehgelenke (8) und der Längen (a) der Armabschnitte (9) erfasst werden und
• das im Objektkoordinatensystem (O) gekoppelte Ende (6)
□ zur Aufnahme des ersten dreidimensionalen Bildes (P₁) des ersten Flächenabschnitts (S₁) durch die 3D-Bildaufnahmeeinheit (3), deren erste Position (x₁, y₁, z₁) und erste Ausrichtung (ϕ₁, ω₁, κ₁) innerhalb des ersten Raumabschnitts (R₁) erfasst wird, in einer ersten Stellung (A₁) positioniert ist und
□ zur Aufnahme mindestens eines weiteren dreidimensionalen Bildes (P₂) mindestens eines weiteren Flächenabschnitts (S₂) durch die 3D-Bildaufnahmeeinheit (3) in mindestens einer weiteren Position (x₂, y₂, z₂) und weiteren Ausrichtung (ϕ₂, ω₂, κ₂) innerhalb eines zweiten Raumabschnitts (R₂) in einer zweiten Stellung (A₂) positioniert wird.

2. Verfahren nach Anspruch 1, wobei
• die 3D-Bildaufnahmeeinheit (3) von der ersten Position (x₁, y₁, z₁) und ersten Ausrichtung (ϕ₁, ω₁, κ₁) in mindestens eine weitere Position (x₂, y₂, z₂) und weitere Ausrichtung (ϕ₂, ω₂, κ₂) gebracht wird,
• mit der 3D-Bildaufnahmeeinheit (3) in der weiteren Position (x₂, y₂, z₂) und weiteren Ausrichtung (ϕ₂, ω₂, κ₂) mindestens ein weiteres dreidimensionales Bild (P₂) mindestens eines weiteren Flächenabschnitts (S₂) der Objektoberfläche (2) elektronisch aufgenommen wird,
• die weitere Position (x₂, y₂, z₂) und weitere Ausrichtung (ϕ₂, ω₂, κ₂) der 3D-Bildaufnahmeeinheit (3) in dem Objektkoordinatensystem (0) mit der Messvorrichtung (4a) erfasst werden und
• den weiteren Bildpunkten (i₂) des weiteren dreidimensionalen Bildes (P₂) weitere 3D-Objektkoordinaten (x₂ᵢ, y₂ᵢ, z₂ᵢ) in dem Objektkoordinatensystem (0) aus der Kenntnis der weiteren 3D-Bildkoordinaten (u₂ᵢ, v₂ᵢ, w₂ᵢ) des weiteren dreidimensionalen Bildes (P₂) sowie der weiteren Position (x₂, y₂, z₂) und weiteren Ausrichtung (ϕ₂, ω₂, κ₂) der 3D-Bildaufnahmeeinheit (3) zugeordnet werden.

3. Verfahren nach Anspruch 2, wobei
• sich der erste Flächenabschnitt (S₁) und der mindestens eine weitere Flächenabschnitt (S₂) der Objektoberfläche (2) teilweise überlappen und
• das erste dreidimensionale Bild (P₁) mit den ersten 3D-Objektkoordinaten (x₁ᵢ, y₁ᵢ, z₁ᵢ) und das mindestens eine weitere dreidimensionale Bild (P₂) mit den weiteren 3D-Objektkoordinaten (x₂ᵢ, y₂ᵢ, z₂ᵢ) zu einem zusammenhängenden dreidimensionale Bild (P₁₊₂) zusammengefügt werden.

4. Verfahren nach einem der Ansprüche 1 bis 3, wobei die Messvorrichtung (4a) von Haltekräften, welche beim Halten der 3D-Bildaufnahmeeinheit (3) wirken, im Wesentlichen entkoppelt ist.

5. Verfahren nach Anspruch 4, wobei die 3D-Bildaufnahmeeinheit (3) von einer Haltevorrichtung (11), welche die Haltekräfte im Wesentlichen aufnimmt, bei der Bildaufnahme gehalten wird.

6. Verfahren nach einem der Ansprüche 1 bis 5, wobei das bewegliche Messende (7), das mit der 3D-Bildaufnahmeeinheit (3) gekoppelt ist, in sechs Freiheitsgraden beweglich ist.

7. Verfahren nach einem der Ansprüche 1 bis 6, wobei
• die erste Stellung (A₁) durch eine erste Bodenverankerung (12), die im Objektkoordinatensystem (0) referenziert und in welcher das gekoppelte Ende (6) fixiert ist, und
• die zweite Stellung (A₂) durch eine zweite Bodenverankerung (13), die im Objektkoordinatensystem (0) referenziert und in welcher das gekoppelte Ende (6) fixiert wird,
bestimmt ist und
• der 3D-Koordinatenmess-Gelenkarm (4a) mit dem Objektkoordinatensystem (O)
□ durch die erste Bodenverankerung (12) zum Erfassen der ersten Position (x₁, y₁, z₁) und ersten Ausrichtung (ϕ₁, ω₁, κ₁) und
□ durch die zweite Bodenverankerung (13) zum Erfassen der mindestens einen weiteren Position (x₂, y₂, z₂) und weiteren Ausrichtung (ϕ₂, ω₂, κ₂)
gekoppelt ist.

8. Verfahren nach einem der Ansprüche 1 bis 6, wobei
• die erste Stellung (A₁) und die zweite Stellung (A₂) durch ein optisches Referenzlasermesssystem (14), das im Objektkoordinatensystem (O) referenziert ist, optisch bestimmt werden und
• der 3D-Koordinatenmess-Gelenkarm (4a) mit dem Objektkoordinatensystem (O) durch das optische Referenzlasermesssystem (14)
□ zum Erfassen der ersten Position (x₁, y₁, z₁) und ersten Ausrichtung (ϕ₁, ω₁, κ₁) und
□ zum Erfassen der mindestens einen weiteren Position (x₂, y₂, z₂) und weiteren Ausrichtung (ϕ₂, ω₂, κ₂) gekoppelt ist.

9. Verfahren nach einem der Ansprüche 1 bis 8, wobei die 3D-Bildaufnahmeeinheit (3) mindestens zwei elektronische Kameras (3a, 3b, 3c), die aus mindestens zwei unterschiedlichen Erfassungswinkeln den ersten Flächenabschnitt (S₁) aufnehmen, zum Erstellen des dreidimensionalen Bildes (P₁) umfasst.

10. Vermessungssystem zur berührungslosen Koordinatenmessung an der Objektoberfläche (2) eines in einem Objektkoordinatensystem (O) zu vermessenden Objekts (1), mit
• einer 3D-Bildaufnahmeeinheit (3),
□ die zum elektronischen Aufnehmen eines ersten dreidimensionalen Bildes (P₁) eines ersten Flächenabschnitts (S₁) der Objektoberfläche (2) ausgebildet ist, wobei sich das erste dreidimensionale Bild (P₁) aus einer Vielzahl an ersten Bildpunkten (i₁), denen jeweils eine Tiefeninformation zugeordnet ist, zusammensetzt, und
□ die erste 3D-Bildkoordinaten (u₁ᵢ, v₁ᵢ, w₁ᵢ), die den ersten Bildpunkten (i₁) in einem Bildkoordinatensystem (B) zugeordnet sind, elektronisch ausgibt,
• einer Messvorrichtung (4a),
□ die mit dem Objektkoordinatensystem (0) koppelbar ist und
□ die zum Erfassen einer ersten Position (x₁, y₁, z₁) und ersten Ausrichtung (ϕ₁, ω₁, κ₁) der 3D-Bildaufnahmeeinheit (3) in dem Objektkoordinatensystem (0) ausgebildet ist,
wobei die Messvorrichtung als ein verstellbarer mechanischer 3D-Koordinatenmess-Gelenkarm (4a) ausgebildet ist, mit
□ einem im Objektkoordinatensystem (O) koppelbaren Ende (6) und einem gegenüberliegenden beweglichen Messende (7),
□ mehreren zwischen den Enden (6, 7) angeordneten und mittels Drehgelenken (8) derart zueinander schwenkbar und/oder verdrehbar verbundenen Armabschnitten (9), dass das bewegliche Messende (7) innerhalb eines ersten Raumabschnitts (R₁) frei bewegbar ist, und
□ Winkelsensoren (10), die den Drehgelenken (8) zugeordnet sind, zum Erfassen der Winkelstellung (α) des jeweiligen Drehgelenks (8),
wobei das bewegliche Messende (7) mit der 3D-Bildaufnahmeeinheit (3) definiert gekoppelt ist und wobei der 3D-Koordinatenmess-Gelenkarm (4a) derart ausgebildet ist, dass die erste Position (x₁, y₁, z₁) und erste Ausrichtung (ϕ₁, ω₁, κ₁) der 3D-Bildaufnahmeeinheit (3) im Objektkoordinatensystem (O) aus der Kenntnis der Winkelstellungen (α) der Drehgelenke (8) und der Längen (a) der Armabschnitte (9) erfassbar sind, weiterhin mit
• einem im Objektkoordinatensystem (0) referenzierten optischen Referenzlasermesssystem (14) und
• einer Datenverarbeitungseinheit (15),
□ welcher die ersten 3D-Bildkoordinaten (u₁ᵢ, v₁ᵢ, w₁ᵢ) von der 3D-Bildaufnahmeeinheit (3) sowie die erste Position (x₁, y₁, z₁) und erste Ausrichtung (ϕ₁, ω₁, κ₁) der 3D-Bildaufnahmeeinheit (3) von der Messvorrichtung (4a) zugeführt sind,
□ mit welcher das optische Referenzlasermesssystem (14) zum Koppeln des koppelbaren Endes (6) des 3D-Koordinatenmess-Gelenkarms (4a) mit dem Objektkoordinatensystem (0) in Signalverbindung steht,
□ die derart ausgebildet ist, dass den ersten Bildpunkten (i₁) erste 3D-Objektkoordinaten (x₁ᵢ, y₁ᵢ. z₁ᵢ) in dem Objektkoordinatensystem (0) aus der Kenntnis der ersten 3D-Bildkoordinaten (u₁ᵢ, v₁ᵢ, w₁ᵢ) sowie der ersten Position (x₁, y₁, z₁) und ersten Ausrichtung (ϕ₁, ω₁, κ₁) der 3D-Bildaufnahmeeinheit (3) elektronisch zugeordnet werden, und
□ die ein Signal, das die den ersten Bildpunkten (i₁) zugeordneten erste 3D-Objektkoordinaten (x₁ᵢ, y₁ᵢ, z₁ᵢ) enthält, ausgibt.

11. Vermessungssystem nach Anspruch 10,
wobei die Messvorrichtung (4a) von Haltekräften, welche beim Halten der 3D-Bildaufnahmeeinheit (3) wirken, im Wesentlichen entkoppelt ist.

12. Vermessungssystem nach Anspruch 11,
mit einer
Haltevorrichtung (11), die beim Halten der 3D-Bildaufnahmeeinheit (3) wirkende Haltekräfte bei der Bildaufnahme im Wesentlichen aufnimmt.

13. Vermessungssystem nach einem der Ansprüche 10 bis 12,
wobei
das bewegliche Messende (7), das mit der 3D-Bildaufnahmeeinheit (3) gekoppelt ist, in sechs Freiheitsgraden beweglich ist.

14. Vermessungssystem nach einem der Ansprüche 10 bis 13,
wobei
die 3D-Bildaufnahmeeinheit (3) mindestens zwei elektronische Kameras (3a, 3b, 3c), die aus mindestens zwei unterschiedlichen Erfassungswinkeln den ersten Flächenabschnitt (S₁) aufnehmen, zum Erstellen des dreidimensionalen Bildes (P₁) umfasst.

## Claims

1. Method for contactless coordinate measurement on the surface of an object (2) of an object (1) to be measured in an object coordinate system (0), wherein
• a first three-dimensional image (P₁) of a first area segment (S₁) of the surface of the object (2) is electronically recorded by a 3D image recording unit (3) in a first position (x₁, y₁, z₁) and first alignment (ϕ₁, ω̅₁, κ₁), the first three-dimensional image (P₁) being composed of a multiplicity of first pixels (i₁), which are respectively assigned an item of depth information,
• the first pixels (i₁) are assigned first 3D image coordinates (u₁ᵢ, v₁ᵢ, w₁ᵢ) in an image coordinate system (B) of the 3D image recording unit (3),
• the first position (x₁, y₁, z₁) and first alignment (ϕ₁, ω̅₁̅, κ₁) of the 3D image recording unit (3) in the object coordinate system (0) are detected by a measuring device (4a) coupled to the object coordinate system (0) and
• the first pixels (i₁) are assigned first 3D object coordinates (x₁ᵢ, y₁ᵢ, z₁ᵢ) in the object coordinate system (0) from the knowledge of the first 3D image coordinates (u₁ᵢ, v₁ᵢ, w₁ᵢ) and also the first position (x₁, y₁, z₁) and first alignment (ϕ₁, ω̅₁, κ₁) of the 3D image recording unit (3),
wherein furthermore
• the measuring device is designed as an adjustable mechanical 3D coordinate-measuring articulated arm (4a), with
□ one end (6) coupled in the object coordinate system (0) and an opposite movable measuring end (7),
□ a number of arm segments (9), which are arranged between the ends (6, 7) and are connected pivotably and/or rotatably in relation to one another by means of rotary joints (8) in such a way that the movable measuring end (7) is freely movable within a first spatial segment (R₁), and
□ angle sensors (10), which are assigned to the rotary joints (8), for detecting the angular position (α) of the respective rotary joint (8),
• the movable measuring end (7) is coupled in a defined way to the 3D image recording unit (3),
• the first position (x₁, y₁, z₁) and first alignment (ϕ₁, ω̅₁, κ₁) of the 3D image recording unit (3) in the object coordinate system (0) are detected from the knowledge of the angular positions (α) of the rotary joints (8) and the lengths (a) of the arm segments (9) and
• the end (6) that is coupled in the object coordinate system (0)
□ is positioned in a first position (A₁) for recording the first three-dimensional image (P₁) of the first area segment (S₁) by the 3D image recording unit (3), the first position (x₁, y₁, z₁) and first alignment (ϕ₁, ω̅₁, κ₁) of which within the first spatial segment (R₁) are detected and
□ is positioned in a second position (A₂) for recording at least one further three-dimensional image (P₂) of at least one further area segment (S₂) by the 3D image recording unit (3) in at least one further position (x₂, y₂, z₂) and further alignment (ϕ₂, ω̅₂, κ₂) within a second spatial segment (R₂).

2. Method according to Claim 1, wherein
• the 3D image recording unit (3) is brought from the first position (x₁, y₁, z₁) and first alignment (ϕ₁, ω̅₁, κ₁) into at least one further position (x₂, y₂, z₂) and further alignment (ϕ₂, ω̅₂, κ₂),
• at least one further three-dimensional image (P₂) of at least one further area segment (S₂) of the surface of the object (2) is electronically recorded by the 3D image recording unit (3) in the further position (x₂, y₂, z₂) and further alignment (ϕ₂, ω̅₂, κ₂),
• the further position (x₂, y₂, z₂) and further alignment (ϕ₂, ω̅₂, κ₂) of the 3D image recording unit (3) in the object coordinate system (0) are detected by the measuring device (4a) and
• the further pixels (i₂) of the further three-dimensional image (P₂) are assigned further 3D object coordinates (x₂ᵢ, y₂ᵢ, z₂ᵢ) in the object coordinate system (0) from the knowledge of the further 3D image coordinates (u₂ᵢ, v₂ᵢ, w₂ᵢ) of the further three-dimensional image (P₂) and also the further position (x₂, y₂, z₂) and further alignment (ϕ₂, ω̅₂, κ₂) of the 3D image recording unit (3).

3. Method according to Claim 2, wherein
• the first area segment (S₁) and the at least one further area segment (S₂) of the surface of the object (2) partially overlap and
• the first three-dimensional image (P₁) with the first 3D object coordinates (x₁ᵢ, y₁ᵢ, z₁ᵢ) and the at least one further three-dimensional image (P₂) with the further 3D object coordinates (x₂ᵢ, y₂ᵢ, z₂ᵢ) are joined together to form a contiguous three-dimensional image (P₁₊₂).

4. Method according to any one of Claims 1 to 3,
wherein
the measuring device (4a) is substantially decoupled from holding forces that act during the holding of the 3D image recording unit (3).

5. Method according to Claim 4, wherein
the 3D image recording unit (3) is held during the image recording by a holding device (11), which substantially absorbs the holding forces.

6. Method according to any one of Claims 1 to 5,
wherein
the movable measuring end (7), which is coupled to the 3D image recording unit (3), is movable in six degrees of freedom.

7. Method according to any one of Claims 1 to 6,
wherein
• the first position (A₁) is determined by a first bottom anchorage (12), which is referenced in the object coordinate system (0) and in which the coupled end (6) is fixed, and
• the second position (A₂) is determined by a second bottom anchorage (13), which is referenced in the object coordinate system (0) and in which the coupled end (6) is fixed,
and
• the 3D coordinate-measuring articulated arm (4a) is coupled to the object coordinate system (0)
□ by the first bottom anchorage (12) for detecting the first position (x₁, y₁, z₁) and first alignment (ϕ₁, ω̅₁, κ₁) and
□ by the second bottom anchorage (13) for detecting the at least one further position (x₂, y₂, z₂) and further alignment (ϕ₂, ω̅₂, κ₂).

8. Method according to any one of Claims 1 to 6, wherein
• the first position (A₁) and the second position (A₂) are optically determined by an optical reference laser measuring system (14), which is referenced in the object coordinate system (0) and
• the 3D coordinate-measuring articulated arm (4a) is coupled to the object coordinate system (0) by the optical reference laser measuring system (14)
□ for detecting the first position (x₁, y₁, z₁) and first alignment (ϕ₁, ω̅₁, κ₁) and
□ for detecting the at least one further position (x₂, y₂, z₂) and further alignment (ϕ₂, ω̅₂, κ₂).

9. Method according to any one of Claims 1 to 8, wherein the 3D image recording unit (3) comprises at least two electronic cameras (3a, 3b, 3c), which record the first area segment (S₁) from at least two different detecting angles, to create the three-dimensional image (P₁).

10. Measuring system for contactless coordinate measurement on the surface of an object (2) of an object (1) to be measured in an object coordinate system (0), with
• a 3D image recording unit (3),
□ which is designed for electronic recording of a first three-dimensional image (P₁) of a first area segment (S₁) of the surface of the object (2), the first three-dimensional image (P₁) being composed of a multiplicity of first pixels (i₁), which are respectively assigned an item of depth information, and
□ electronically outputs the first 3D image coordinates (u₁ᵢ, v₁ᵢ, w₁ᵢ), which are assigned to the first pixels (i₁) in an image coordinate system (B),
• a measuring device (4a),
□ which can be coupled to the object coordinate system (0) and
□ which is designed for detecting a first position (x₁, y₁, z₁) and first alignment (ϕ₁, ω̅₁, κ₁) of the 3D image recording unit (3) in the object coordinate system (0),
wherein the measuring device is designed as an adjustable mechanical 3D coordinate-measuring articulated arm (4a), with
□ one end (6) coupled in the object coordinate system (0) and an opposite movable measuring end (7),
□ a number of arm segments (9), which are arranged between the ends (6, 7) and are connected pivotably and/or rotatably in relation to one another by means of rotary joints (8) in such a way that the movable measuring end (7) is freely movable within a first spatial segment (R₁), and
□ angle sensors (10), which are assigned to the rotary joints (8), for detecting the angular position (α) of the respective rotary joint (8),
wherein the movable measuring end (7) is coupled in a defined way to the 3D image recording unit (3) and
wherein the 3D coordinate-measuring articulated arm (4a) is designed in such a way that the first position (x₁, y₁, z₁) and first alignment (ϕ₁, ω̅₁, κ₁) of the 3D image recording unit (3) in the object coordinate system (0) can be detected from the knowledge of the angular positions (α) of the rotary joints (8) and the lengths (a) of the arm segments (9),
furthermore with
• an optical reference laser measuring system (14) referenced in the object coordinate system (0) and
• a data processing unit (15),
□ which is fed the first 3D image coordinates (u₁ᵢ, v₁ᵢ, w₁ᵢ) from the 3D image recording unit (3) and also the first position (x₁, y₁, z₁) and first alignment (ϕ₁, ω̅₁, κ₁) of the 3D image recording unit (3) from the measuring device (4a),
□ with which the optical reference laser measuring system (14) is in signalling connection for coupling the couplable end (6) of the 3D coordinate-measuring articulated arm (4a) to the object coordinate system (0),
□ which is designed in such a way that the first pixels (i₁) are electronically assigned first 3D object coordinates (x₁ᵢ, y₁ᵢ, z₁ᵢ) in the object coordinate system (0) from the knowledge of the first 3D image coordinates (u₁ᵢ, v₁ᵢ, w₁ᵢ) and also the first position (x₁, y₁, z₁) and first alignment (ϕ₁, ω̅₁, κ₁) of the 3D image recording unit (3), and
□ which outputs a signal that contains the first 3D object coordinates (x₁ᵢ, y₁ᵢ, z₁ᵢ) assigned to the first pixels (i₁).

11. Measuring system according to Claim 10,
wherein
the measuring device (4a) is substantially decoupled from holding forces that act during the holding of the 3D image recording unit (3).

12. Measuring system according to Claim 11,
with a holding device (11), which substantially absorbs the holding forces acting during the holding of the 3D image recording unit (3) in the recording of the image.

13. Measuring system according to any one of Claims 10 to 12,
wherein
the movable measuring end (7), which is coupled to the 3D image recording unit (3), is movable in six degrees of freedom.

14. Measuring system according to any one of Claims 10 to 13, wherein
the 3D image recording unit (3) comprises at least two electronic cameras (3a, 3b, 3c), which record the first area segment (S₁) from at least two different detecting angles, to create the three-dimensional image (P₁).

## Revendications

1. Procédé pour la mesure sans contact de coordonnés sur la surface d'objet d'un objet (1) à mesurer dans un système de coordonnées d'objet (O),
• une première image tridimensionnelle (P₁) d'une première section de surface (S₁) de la surface d'objet (2) étant prise de manière électronique avec une unité de prise d'images 3D (3) dans une première position (x₁, x₁, z₁) et une première orientation (ϕ₁, ω₁, κ₁), cependant que la première image tridimensionnelle (P₁) se compose d'une multitude de premiers points d'image (i₁) auxquels une information de profondeur est respectivement associée,
• des premières coordonnées d'image 3D (u₁ᵢ, v₁ᵢ, w₁ᵢ) étant associées aux premiers points d'image (i₁) dans un système de coordonnées d'image (B) de l'unité de prise d'images 3D (3),
• la première position (x₁, y₁, z₁) et la première orientation (ϕ₁, ω₁, κ₁) de l'unité de prise d'images 3D (3) étant saisies dans le système de coordonnées d'objet (O) par un dispositif de mesure (4a) couplé au système de coordonnées d'objet (O) et
• des premières coordonnées d'objet 3D étant associées aux premiers points d'image (i₁) dans le système de coordonnées d'objet (O) à partir de la connaissance des premières coordonnées d'image 3D (u₁ᵢ, v₁ᵢ, w₁ᵢ) ainsi que de la première position (x₁, y₁, z₁) et de la première orientation (ϕ₁, ω₁, κ₁) de l'unité de prise d'images 3D (3),
• le dispositif de mesure étant de plus configuré comme un bras articulé de mesure de coordonnées 3D mécanique réglable(4) avec
□ une extrémité (6) couplée dans le système de coordonnées d'objet (O) et une extrémité de mesure mobile opposée (7),
□ plusieurs sections de bras (9) placées entre les extrémités (6, 7) et reliées de manière pivotante et/ou rotative l'une par rapport à l'autre au moyen d'articulations tournantes (8) de telle manière que l'extrémité de mesure mobile (7) est mobile librement à l'intérieur d'une première section d'espace (R₁) et
□ des capteurs angulaires (10) qui sont associés aux articulations tournantes (8) pour la détection de la position angulaire (α) de l'articulation tournante respective (8),
• l'extrémité de mesure mobile (7) est couplée de manière définie avec l'unité de prise d'images 3D (3),
• la première position (x₁, y₁, z₁) et la première orientation (ϕ₁, ω₁, κ₁) de l'unité de prise d'images 3D (3) sont saisies dans le système de coordonnées d'objet (O) à partir de la connaissance des positions angulaires (α) des articulations tournantes (8) et des longueurs (a) des sections de bras (9) et
• l'extrémité (6) couplée dans le système de coordonnées d'objet (O)
□ est positionnée dans une première position (A₁) pour la prise de la première image tridimensionnelle (P₁) de la première section de surface (S₁) par l'unité de prise d'images 3D (3) dont la première position (x₁, y₁, z₁) et la première orientation (ϕ₁, ω₁, κ₁) sont saisies à l'intérieur de la première section d'espace (R₁) et
□ est positionnée dans une seconde position (A₂) pour la prise d'au moins une autre image tridimensionnelle (P₂) d'au moins une autre section de surface (S₂) par l'unité de prise d'images 3D (3) dans au moins une autre position (x₂, y₂, z₂) et une autre orientation (ϕ₂, ω₂, κ₂) à l'intérieur d'une seconde section d'espace (R2).

2. Procédé selon la revendication 1,
• l'unité de prise d'images 3D (3) étant amenée de la première position (x₁, y₁, z₁) et de la première orientation (ϕ₁, ω₁, κ₁) dans au moins une autre position (x₂, y₂, z₂) et une autre orientation (ϕ₂, ω₂, κ₂),
• au moins une autre image tridimensionnelle (P₂) d'au moins une autre section de surface (S₂) de la surface de l'objet (2) étant prise de manière électronique avec l'unité de prise d'images 3D (3) dans l'autre position (x₂, y₂, z₂) et l'autre orientation (ϕ₂, ω₂, κ₂),
• l'autre position (x₂, y₂, z₂) et l'autre orientation (ϕ₂, ω₂, κ₂) de l'unité de prise d'images 3D (3) étant saisies dans le système de coordonnées d'objet (O) avec le dispositif de mesure (4a) et
• d'autres coordonnées d'objet 3D (x₂ᵢ, y₂ᵢ, z₂ᵢ) étant associées dans le système de coordonnées d'objet (O) aux autres points d'image (i₂) de l'autre image tridimensionnelle (P₂) à partir de la connaissance des autres coordonnées d'image 3D (u₂ᵢ, v₂ᵢ, w₂ᵢ) de l'autre image tridimensionnelle (P₂) ainsi que de l'autre position (x₂, y₂, z₂) et l'autre orientation (ϕ₂, ω₂, κ₂) de l'unité de prise d'images 3D (3).

3. Procédé selon la revendication 2,
• la première section de surface (S1) et l'autre section de surface qui existe au moins (S2) de la surface de l'objet (2) se chevauchant partiellement et
• la première image tridimensionnelle (P₁) avec les premières coordonnées d'objet 3D (x₁ᵢ, y₁ᵢ, z₁ᵢ) et l'autre image tridimensionnelle qui existe au moins (P₂) avec les autres coordonnées d'objet 3D (x₂ᵢ, y₂ᵢ, z₂ᵢ) étant assemblées en une image tridimensionnelle continue (P₁₊₂).

4. Procédé selon l'une des revendications 1 à 3, le dispositif de mesure (4a) étant substantiellement découplé de forces de maintien qui agissent lors de la tenue de l'unité de prise d'images 3D (3).

5. Procédé selon la revendication 4, l'unité de prise d'images 3D (3) étant tenue lors de la prise d'images par un dispositif de support (11) qui absorbe substantiellement les forces de maintien.

6. Procédé selon l'une des revendications 1 à 5, l'extrémité de mesure mobile (7) qui est couplée avec l'unité de prise d'images 3D (3) étant mobile en six degrés de liberté.

7. Procédé selon l'une des revendications 1 à 6,
• la première position (A₁) étant déterminée par un premier ancrage au sol (12) qui est référencé dans le système de coordonnées d'objet (O) et dans lequel l'extrémité couplée (6) est fixée et
• la seconde position (A₂) étant déterminée par un second ancrage au sol (13) qui est référencé dans le système de coordonnées d'objet (O) et dans lequel l'extrémité couplée (6) est fixée et
• le bras articulé de mesure de coordonnées 3D (4a) avec le système de coordonnées d'objet (O) étant couplé
□ par le premier ancrage au sol (12) pour saisir la première position (x₁, y₁, z₁) et la première orientation (ϕ₁, ω₁, κ₁) et
□ par le second ancrage au sol (13) pour saisir l'autre position qui existe au moins (x₂, y₂, z₂) et l'autre orientation qui existe au moins (ϕ₂, ω₂, κ₂).

8. Procédé selon l'une des revendications 1 à 6,
• la première position (A1) et la seconde position (A2) étant déterminées de manière optique par un système de mesure laser optique de référence (14) qui est référencé dans le système de coordonnées d'objet (O) et
• le bras articulé de mesure de coordonnées 3D (4a) étant couplé avec le système de coordonnées d'objet (O) par le système de mesure laser optique de référence (14)
□ pour saisir la première position (x₁, y₁, z₁) et la première orientation (ϕ₁, ω₁, κ₁) et
□ pour saisir l'autre position qui existe au moins (x₂, y₂, z₂) et l'autre orientation qui existe au moins (ϕ₂, ω₂, κ₂).

9. Procédé selon l'une des revendications 1 à 8, l'unité de prise d'images 3D (3) comprenant au moins deux caméras électroniques (3a, 3b, 3c) qui prennent l'image de la première section de surface (S₁) à partir d'au moins deux angles de saisie différents pour réaliser l'image tridimensionnelle (P₁).

10. Système de mesure pour la mesure sans contact de coordonnées de la surface d'objet (2) d'un objet (1) à mesurer dans un système de coordonnées d'objet (O) avec
• une unité de prise d'images 3D (3),
□ qui est configurée pour la prise électronique d'une première image tridimensionnelle (P₁) d'une première section de surface (S1) de la surface de l'objet (2), la première image tridimensionnelle (P₁) étant composée d'une multitude de premiers points d'image (i₁) auxquels une information de profondeur est respectivement associée et
□ qui sort de manière électronique les premières coordonnées d'image 3D (u₁ᵢ, v₁ᵢ, w₁ᵢ) qui sont associées aux premiers points d'image (i₁) dans un système de coordonnées d'image (B),
• un dispositif de mesure (4a)
□ qui peut être couplé avec le système de coordonnées d'objet (O) et
□ qui est configuré pour la détection d'une première position (x₁, y₁, z₁) et d'une première orientation (ϕ₁, ω₁, κ₁) de l'unité de prise d'images 3D (3) dans le système de coordonnées d'objet (O),
cependant que le dispositif de mesure est configuré comme un bras articulé de mesure de coordonnées 3D mécanique réglable (4a) avec
□ une extrémité (6) qui peut être couplée dans le système de coordonnées d'objet (O) et une extrémité de mesure mobile opposée (7),
□ plusieurs sections de bras (9) placées entre les extrémités (6, 7) et reliées de manière pivotante et/ou rotative l'une par rapport à l'autre au moyen d'articulations tournantes (8) de telle manière que l'extrémité de mesure mobile (7) est mobile librement à l'intérieur d'une première section d'espace (R₁) et
□ des capteurs angulaires (10) qui sont associés aux articulations tournantes (8) pour la détection de la position angulaire (α) de l'articulation tournante respective (8),
l'extrémité de mesure mobile (7) étant couplée de manière définie avec l'unité de prise d'images 3D (3) et le bras articulé de mesure de coordonnées 3D (4a) étant configuré de telle manière que la première position (x₁, y₁, z₁) et la première orientation (ϕ₁, ω₁, κ₁) de l'unité de prise d'images 3D (3) dans le système de coordonnées d'objet (O) peuvent être saisies à partir de la connaissance des positions angulaires (α) des articulations tournantes (8) et des longueurs (a) des sections de bras (9),
de plus avec
• un système de mesure laser optique de référence (14) référencé dans le système de coordonnées d'objet (O) et
• une unité de traitement de données (15),
□ à laquelle les premières coordonnées d'image 3D (u₁ᵢ, v₁ᵢ, w₁ᵢ) ainsi que la première position (x₁, y₁, z₁) et la première orientation (ϕ₁, ω₁, κ₁) de l'unité de prise d'images 3D (3) du dispositif de mesure (4a) sont amenées,
□ avec laquelle le système de mesure laser optique de référence (14) est en relation de signal pour coupler l'extrémité qui peut être couplée (6) du bras articulé de mesure de coordonnées 3D (4a) avec le système de coordonnées d'objet (O),
□ qui est configurée de telle manière que des premières coordonnées d'objet 3D (x₁ᵢ, y₁ᵢ, z₁ᵢ) dans le système de coordonnées d'objet (O) sont associées de manière électronique aux premiers points d'image (i₁) à partir de la connaissance des premières coordonnées d'image 3D (u₁ᵢ, v₁ᵢ, w₁ᵢ) ainsi que de la première position (x₁, y₁, z₁) et la première orientation (ϕ₁, ω₁, κ₁) de l'unité de prise d'images 3D (3) et
□ qui émet un signal qui contient les premières coordonnées d'objet 3D (x₁ᵢ, y₁ᵢ, z₁ᵢ) associées aux premiers points d'image (i₁).

11. Système de mesure selon la revendication 10, le dispositif de mesure (4a) étant substantiellement découplé de forces de maintien qui agissent pour tenir l'unité de prise d'images 3D (3).

12. Système de mesure selon la revendication 11 avec un dispositif de support (11) qui absorbe substantiellement les forces de maintien qui agissent lors de la tenue de l'unité de prise d'images 3D (3) lors de la prise d'images.

13. Système de mesure selon l'une des revendications 10 à 12, l'extrémité de mesure mobile (7) qui est couplée à l'unité de prise d'images 3D (3) étant mobile en six degrés de liberté.

14. Système de mesure selon l'une des revendications 10 à 13, l'unité de prise d'images 3D (3) comprenant au moins deux caméras électroniques (3a, 3b, 3c) qui prennent l'image de la première section de surface (S₁) à partir d'au moins deux angles de détection différents pour réaliser l'image tridimensionnelle (P₁).
